# EUROPEAN PATENT APPLICATION

(11) **EP 1 460 341 A2**
(43) Date of publication of application: **22.09.2004**
(21) Application number: 04100422.7
(22) Date of filing: 05.02.2004
(51) Int. Cl.: F24C 7/08, H02B 15/00

(54) **Angular connection element for cabinets, in particular cabinets for electric/electronic apparatuses**

(30) Priority: 21.03.2003 IT MI20030557
(71) Applicant: E.T.A. S.p.A., 22035 Canzo (Como) (IT)
(72) Inventor: TURATI, Aldo, 22030, CASLINO D'ERBA (COMO) (IT)
(74) Representative: Ponzellini, Gianmarco

(57) **Abstract**

It is disclosed an angular connection element for metal cabinets for holding electric and/or electronic apparatuses, in which a main body (2) has three emerging engagement portions (3a, 3b, 3c) designed to be engaged to respective section members (4) defining crosspieces (4a) and uprights (4b) of a cabinet structure (5); the connection element comprises first attachment means to enable engagement of further elements of the cabinet structure such as hinges (7) and hooking supports (8) for panels. Also present is second attachment means also set to enable engagement of further elements of the cabinet structure such as further uprights (21) and/or crosspieces constituting the inner structure. Finally, there is also third attachment means (19) allowing engagement of the cabinet roof (103), bottom, feet, mouldings, wheels and/or eyebolts.

## Description

The present invention relates to an angular connection element for cabinets, in particular metal cabinets for holding electric/electronic apparatuses.

It is also part of the present invention a modular metal cabinet provided with angular connection elements in accordance with the invention.

It is known that widely spread on the market are metal cabinets having a load bearing structure defined by modular elements.

In particular this cabinet typology comprises a predetermined number of section members, all of them generally having the same section and being designed to constitute the crosspieces of the bottom and roof and the standing elements or uprights of the cabinet.

Specifically, eight connection elements are present, one for each corner of the cabinet structure, that are designed to connect two respective crosspieces of said bottom or roof and the respective upright.

Actually, defined by the above mentioned elements is the parallelepiped load bearing structure with which the different closing panels are subsequently engaged as well as the other parts designed to define the inner cabinet structure.

In more detail as regards the angular connection elements, it is to be pointed out first of all that said elements may consist of a single piece or, alternatively, of two portions to be joined to each other, in particular the first portion is designed to engage the crosspiece elements of the roof or bottom, whereas the second portion is linked to the upright element. Also present are suitable fastening means to join the first and second portions of the connection elements together and define the cabinet skeleton.

To allow engagement between the connection element or elements and the section members, said elements generally have jutting out portions sometimes conforming in shape to the inner cavity of the section member intended for engagement.

These jutting out portions are inserted in the section member and connected thereto by welding, fastening with screws or equivalent systems.

Once the support frame has been mounted, mounting of possible further upright and/or crosspiece elements designed to constitute the inner structure of the modular cabinet is carried out, so as to define shelves or rests for the electric/electronic apparatuses to be housed therein.

Generally, these elements are directly engaged with the uprights that for the purpose are provided with appropriate holes for engagement.

In an alternative embodiment, the possibility of associating auxiliary elements with the uprights is provided, which auxiliary elements are in turn able to constitute the support for inner uprights and/or crosspieces.

Once again the section members constituting the uprights generally carry the engagement means for associating the side panels and back panel in the cabinet, said uprights also supporting the respective door hinges and defining the abutment surfaces of same.

The panels defining the roof and bottom are on the contrary engaged with the horizontal section members or crosspieces and possibly also linked to the angular element with which the eyebolts for lifting and transport of the cabinet are also engaged.

While the cabinet typologies briefly described above are presently widespread on the market, they however can be improved under different points of view.

It is to be pointed out first of all that the angular connection elements of known type mainly perform the function of connecting the different section members with each other possibly allowing the eyebolts to be linked thereto. The hitherto known angular elements are not able to perform other particular functions.

Then the presence of a great number of elements added to the structure to allow engagement of the different cabinet parts necessarily involves an increase in the manufacturing costs, as well as an increase in the time necessary for assembling the different parts constituting the cabinet. In addition there is the important requirement of making section members constituting the uprights and crosspieces in a dedicated manner because it is necessary for the latter to be provided with the appropriate holes or engagement seats adapted to allow assembling of the different pieces.

In other words it has not been hitherto possible to use standard section members (and devoid of holes) which are inexpensive, because in any case it is always necessary to carry out some operations to form said holes or engagement means.

Accordingly, the present invention aims of substantially solving all drawbacks of the known art.

It is a first aim of the invention to make available angular connection elements for cabinets of simple structure and easy manufacture that however enable the angular element itself to perform additional functions as compared with the angular elements of the known art.

It is a further aim of the invention to provided an angular connection element into which the greatest number of functions are integrated and which is also adapted to allow use of section members that may possibly be devoid of holes or punches.

Another aim of the invention is to provide angular elements to be used in the same manner for all corners of the load bearing structure of the cabinet and capable of allowing a steady and reliable engagement of the section members as well as of the panels and the inner structure of the chassis.

A still further aim of the invention is to make available a modular cabinet that can be assembled with a very limited number of elements, which will bring about a reduction in the assembling steps.

The foregoing and further aims that will become more apparent in the course of the following description are substantially achieved by an angular connection element for cabinets, in particular metal cabinets designed to hold electric and/or electronic apparatus in accordance with the invention.

Further features and advantages will be best understood from the detailed description of a preferred embodiment in accordance with the appended claims.

The detailed description of a preferred embodiment will be taken hereinafter by way of non-limiting example, with reference to the accompanying drawings, in which:
- Fig. 1 is a perspective view of a load bearing structure designed to constitute the skeleton of a metal cabinet for holding electric and/or electronic apparatuses in accordance with the invention;
- Fig. 2 is an exploded view of the load bearing structure seen in Fig. 1;
- Fig. 3 is a view of a detail of the connection element seen in Fig. 2, to an enlarged scale;
- Figs. 4 and 5 are two perspective views from top and from below of the connection element in accordance with the invention;
- Fig. 6 shows a support structure of a modular cabinet provided with some elements adapted to define the inner cabinet structure;
- Fig. 7 is an exploded view of a possible assembling configuration of the modular cabinet in accordance with the invention;
- Fig. 8 shows a further example of a modular cabinet in accordance with the invention provided with an opening door with hinges opening at 90°;
- Fig. 9 is an exploded view of an angular connection element in accordance with the invention;
- Fig. 10 is an exploded top view of the same angular connection element; and
- Fig. 11 shows the angular connection element seen in Fig. 9 in engagement with further elements of the modular cabinet.

With reference to the drawings, a metal cabinet in particular for holding electric and/or electronic apparatuses has been generally identified with reference numeral 100, while an angular connection element to be used in said cabinets has been denoted at 1.

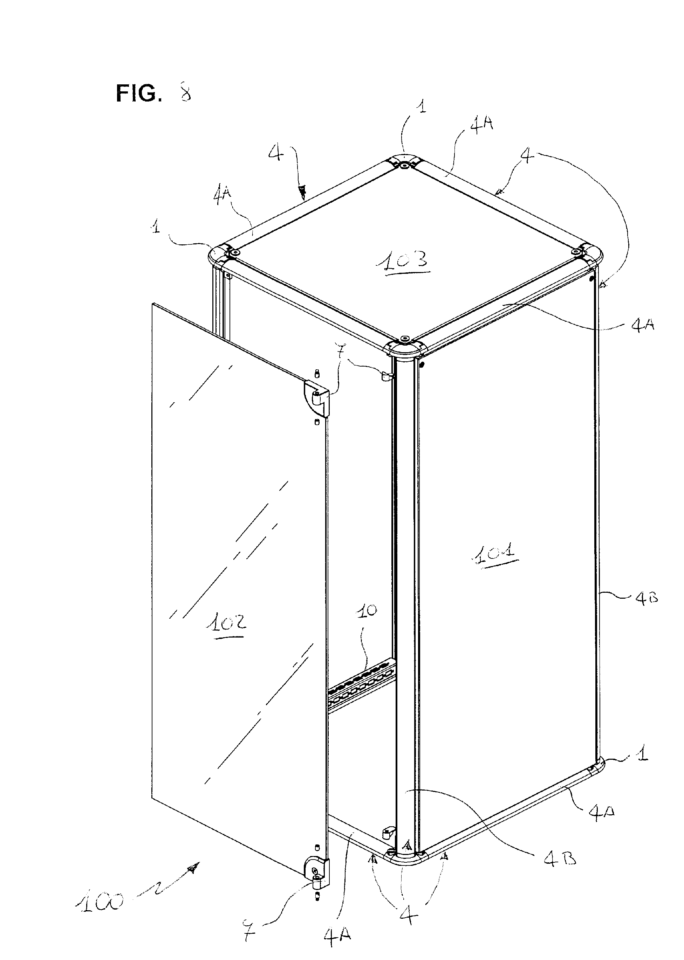

A cabinet in accordance with the invention is in particular shown in the accompanying Fig. 8 at least as regards its main features.

In particular the presence of a predetermined number of section members 4 can be seen which constitute the crosspiece elements 4a designed to define the cabinet base portion and roof and the upright elements 4b connecting the cabinet base with the cabinet roof.

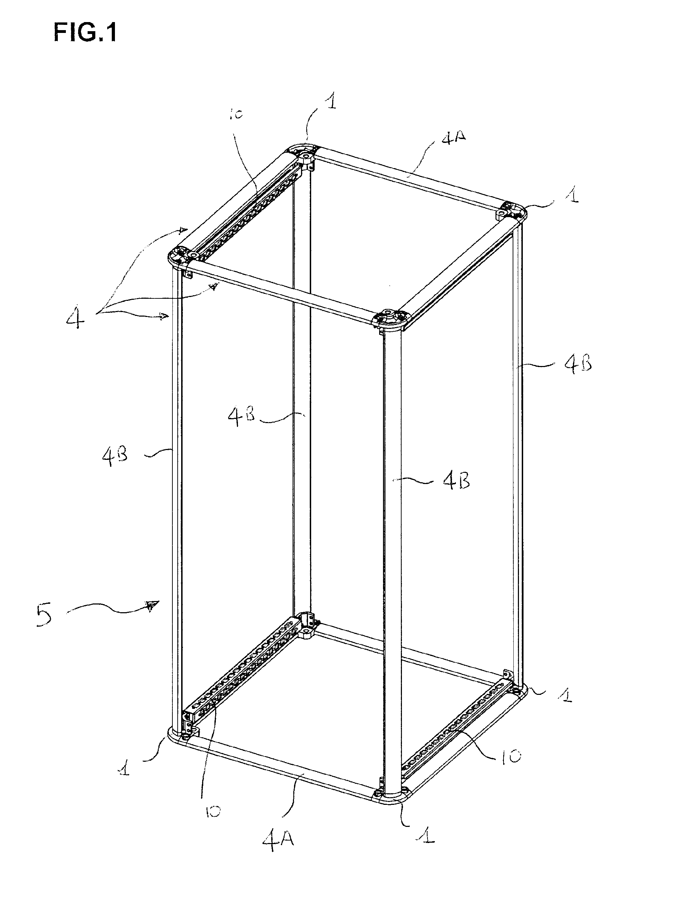

In particular Fig. 1 shows the load bearing structure of this cabinet.

There are eight angular connection elements disposed in the respective vertices of the structure, each of which receives two crosspieces 4a and one upright 4b of the cabinet in engagement, so as to define a load bearing structure 5 of a substantially parallelepiped shape.

The structure in Fig. 1 will then receive the appropriate panels 101 and closing doors 102 in engagement, as well as the cabinet roof 103 and bottom and the other accessory parts designed to define the inner structure of the cabinet, as better clarified in the following.

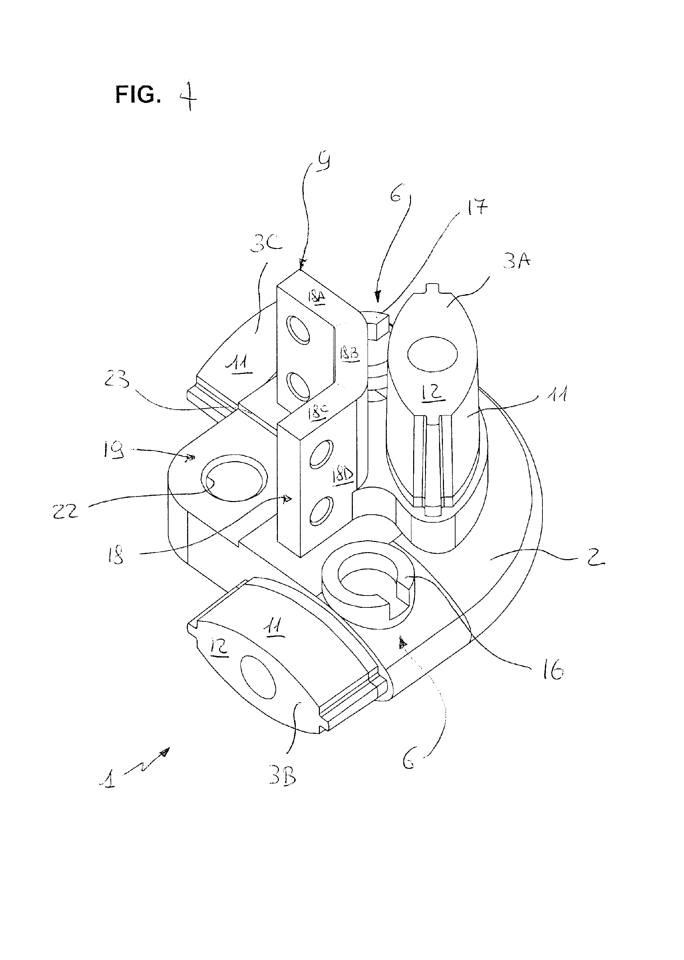

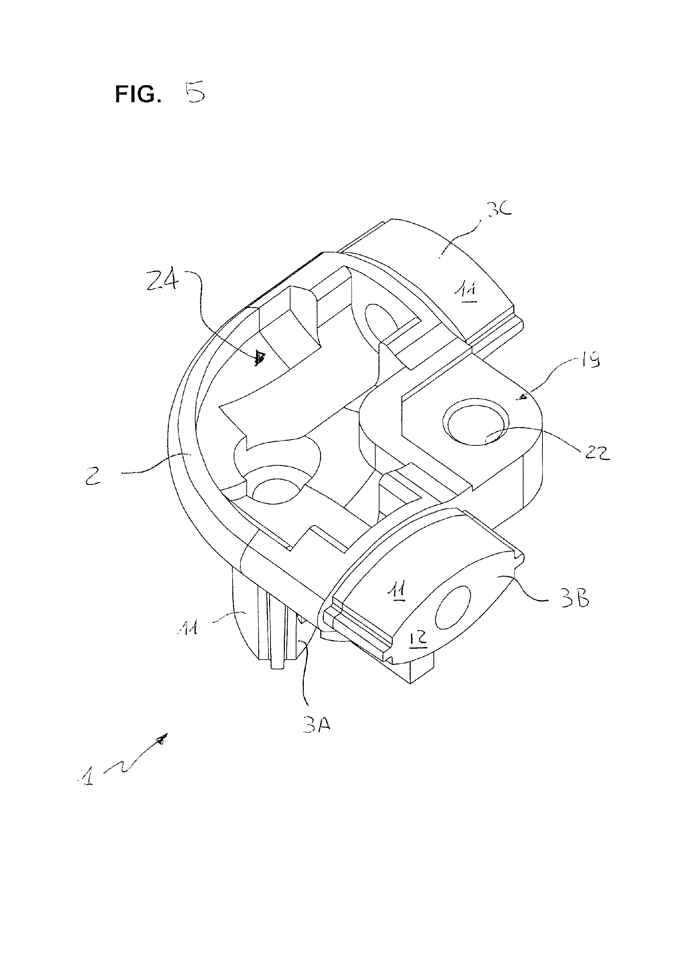

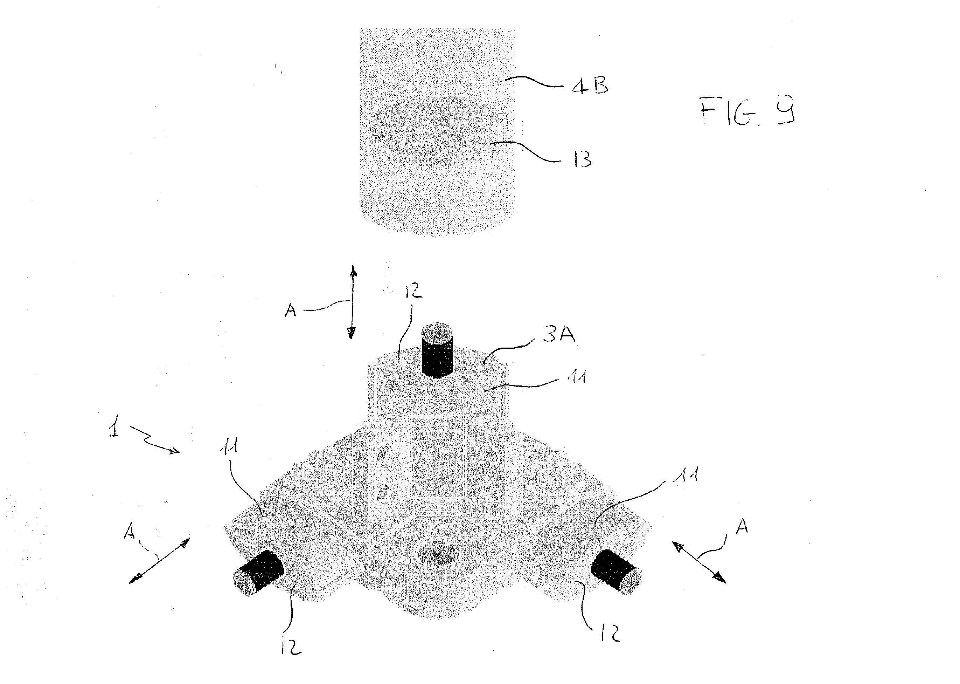

As previously pointed out, one of the fundamental elements constituting the present cabinet structure consists of the angular connection element 1. This element is in particular highlighted in Figs. 4 and 5, as well as also in Figs. 9, 10 and 11.

The angular element is first of all made up of a main body 2 from which a first, a second and a third engagement portion 3a, 3b and 3c emerge, said portions being designed to come into engagement with the respective section members 4 defining crosspiece elements 4a and upright elements 4b of the cabinet load bearing structure 5 (see in this connection Fig. 9).

Each of these engagement portions 3a, 3b, 3c has a respective surface 11 conforming in shape to an inner cavity of the section member 4 so as to allow insertion into the latter along a direction A and to ensure a steady engagement of the structure.

Advantageously, surface 11 can be of a light conical shape in such a manner as to be fitted into the section member and generate small friction forces maintaining the angular element and section member connected with each other.

As it is also possible to see still in Fig. 9, the engagement portions 3a, 3b, 3c each have an abutment surface 12 which is transverse and preferably orthogonal to the insertion direction A of the engagement portion 3a, 3b, 3c itself in the section member 4.

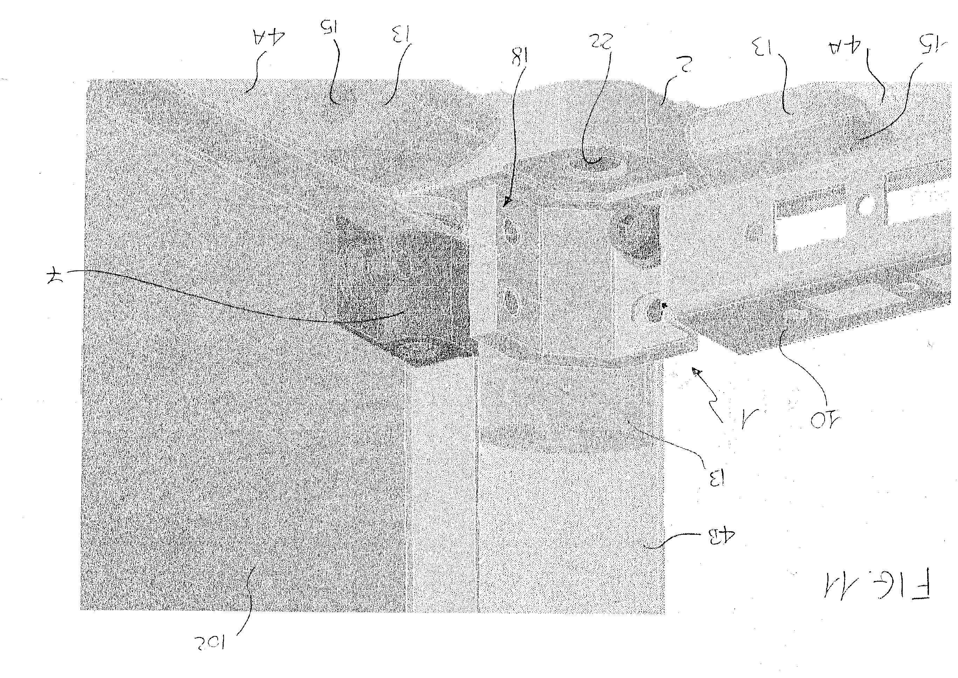

Looking at Fig. 11 it is possible to see that the abutment surface 12 abuts against a body 13 housed within the section member in such a manner as to define a precise positioning of the angular element with respect to the section member 4 itself.

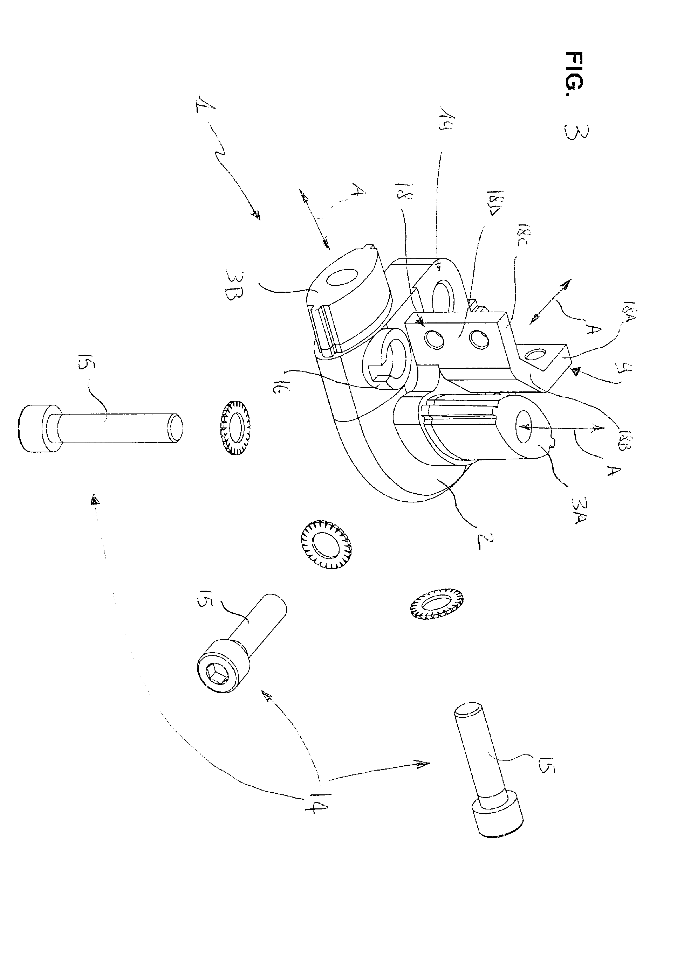

The angular element is then provided with appropriate fastening means 14 to secure it to the section members 4 (see Fig. 3).

For example, the engagement portions 3a, 3b, 3c can be directly welded to the sections members 4 or, as an alternative to what illustrated, said fastening means 14 may be defined by respective screws 15 capable of connecting the engagement portion 3a, 3b, 3c with the body 13 housed within the section member in a removable manner, as shown in Fig. 11.

In this connection the presence of a lower cavity 24 is shown in Fig. 5 which cavity allows insertion of screws 15 for fastening to the section members 4.

As also shown in Fig. 3, these screws will be inserted along a direction substantially coincident with the insertion direction A and will fasten the engagement portions 3a, 3b, 3c to the bodies 13 of each of the section members (in this connection see again Fig. 11).

If the geometry of the engagement portions 3a, 3b, 3c is looked at, it is possible to notice that the latter have a substantially elliptical section orthogonal to the insertion direction A.

Advantageously, all the engagement portions 3a, 3b, 3c will be equal to each other in such a manner as to be able to utilise the same section of the section member to make uprights and crosspieces.

Now, referring particularly to the illustration in Fig. 4, it is possible to see an angular connection element provided with many elements and attachment portions to allow direct engagement to the angular connection element and all the different components of the metal cabinet.

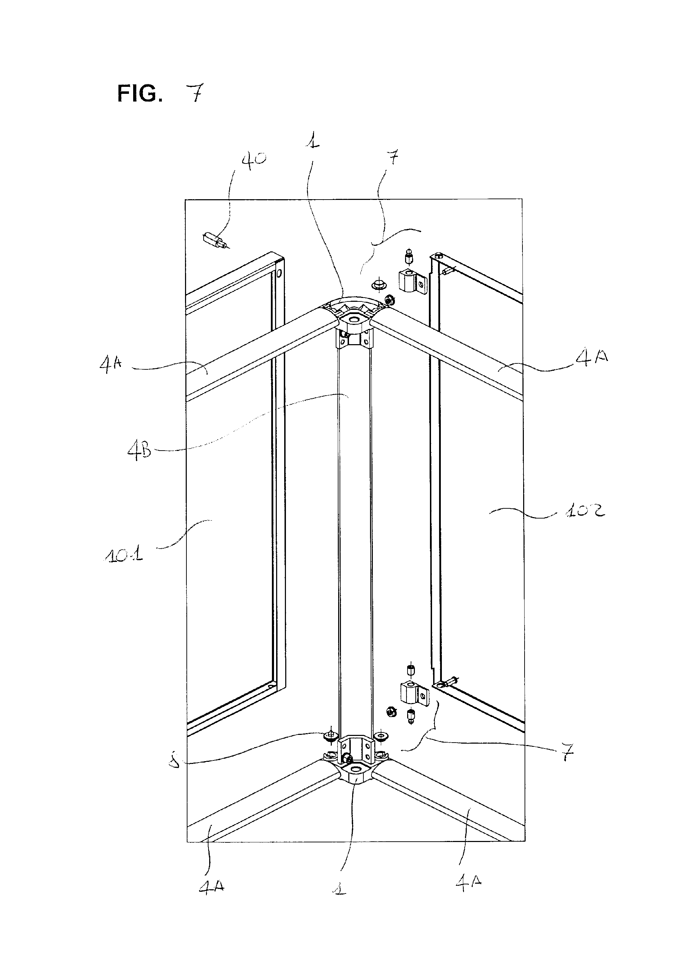

First of all it is possible to see the presence of first attachment means 6 associated with the main body 2 and set to enable engagement of further elements of the cabinet structure such as hinges 7 and hooking supports 8 for panels. This first attachment means 6 comprises at least one, and preferably two, seats 16, 17 made of one piece construction in the main body 2. From a geometric point of view the seats 16, 17 have a substantially circular shape so that they can alternately receive either the hinge 7 of the cabinet door or the hooking supports 8 for panels 101 (Fig. 7).

As still shown in Fig. 4, the two seats 16, 17 lie in the same horizontal plane, under use conditions of the angular element.

Fig. 7 shows, by way of example, how these seats 16, 17 can be used.

In particular, it is possible to associate a side panel 101 in a fixed manner by using an appropriate lower interposition element 8 adapted to receive a lower portion of the side panel 10 in engagement and by engaging the upper portion of the side panel in a fixed manner (for example, by the screw 40 shown in the figure) directly to a further portion of the angular connection element, as better described in the following.

Looking on the contrary at the portion to the right in Fig. 7, it is possible to see that a hinge 17 of a cabinet door 102 can be also engaged in one of the seats 16, 17. This hinge 7 is pivotally mounted directly on seat 16, 17 and then fastened to the cabinet door that will be able to perform the necessary angular rotations for opening/closing.

Obviously, the hinge typology to be associated with the cabinet door can be different from the described one depending on requirements.

In particular, shown in Fig. 8 is an example of a hinge opening at 90° which is engaged in seats 16, 17 and is different from that in Fig. 7.

Turning back to Fig. 4, it is possible to see that the angular element is also provided with second attachment means 9 again associated with the main body and also set to allow engagement of further elements of the structure of a cabinet such as further uprights 21 and/or crosspieces 10 constituting the inner cabinet structure.

In this connection it is to be noted that once the load bearing structure 5 of the modular cabinet has been made, internally of such a structure further inner elements are always to be associated that will constitute the rests for possible shelves or for support of the apparatus to be housed in the cabinet.

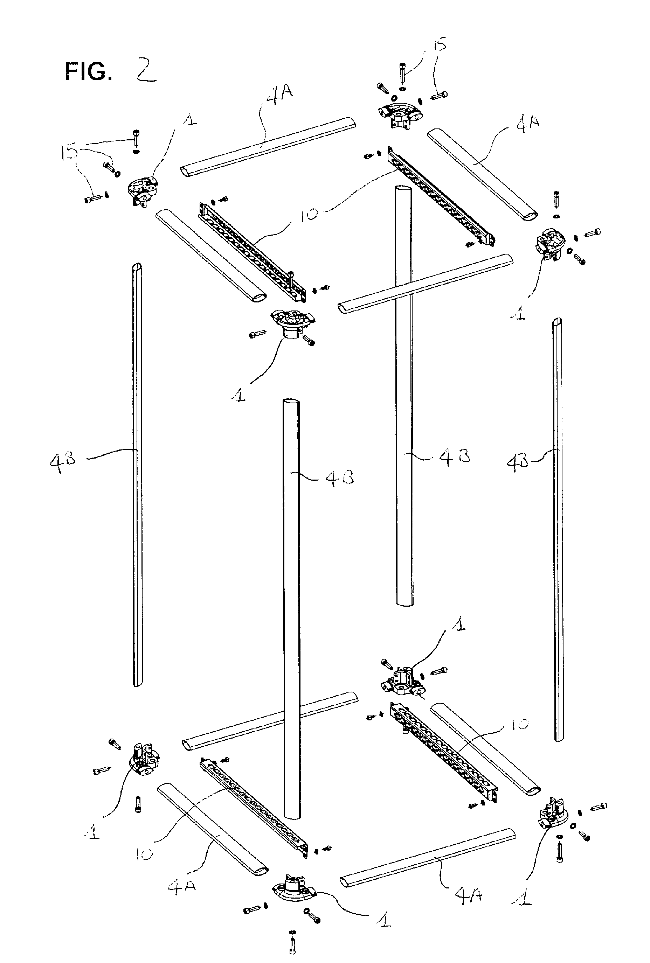

In particular, Figs. 1 and 2 show the presence of two crosspiece elements 10 engaged with the lower portion of the cabinet and of two crosspiece elements engaged with the upper portion of the same cabinet.

It is apparent that these elements will be able to be mounted at each of the four sides forming the base or roof.

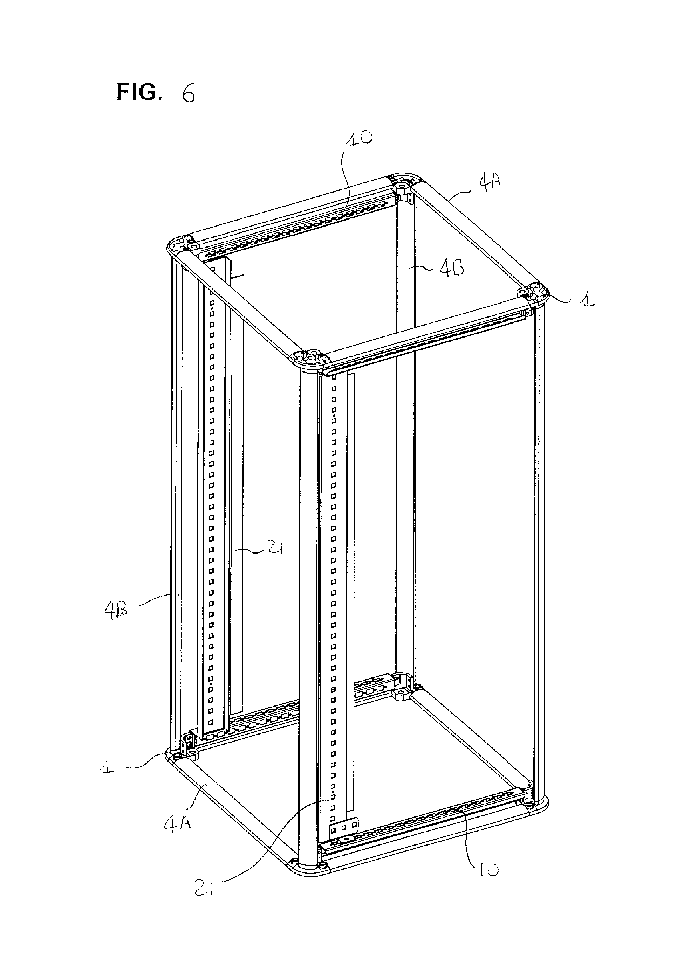

Fig. 6 also shows a possible engagement of uprights 21 with the previously mentioned crosspieces 10. Obviously, these inner elements in the cabinet will be able to be engaged so as to obtain the most various inner structures, depending on requirements, therefore making the inner arrangement of the spaces and the hooking elements very flexible.

In the embodiments shown the second attachment means 9 directly receives the crosspieces 10 and only said crosspieces carry the uprights 21.

Obviously, by carrying out simple structural modifications said second attachment means will directly engage the uprights 21.
In more detail in terms of construction, it is possible to see that the second attachment means is defined by a structure 18 emerging from the main body 2. This emerging structure 18 too is made of one piece construction with the main body 2.

This structure in particular performs different functions: first of all it defines an abutment surface 18 for doors 102 and possibly panels 101 of the cabinet for which it actually constitutes a mounting element and a closing stop.

The emerging structure 18 has a section in a horizontal plane defined by angled lengths 18a, 18b, 18c in succession; for example the first and third lengths 18a, 18c are orthogonal to each other.

Exactly at the first and third lengths some holes are formed (for example two holes for each length as in the accompanying Fig. 4) that are intended for the most different tasks such as fastening of side panels 101 (see Fig. 7) or also engagement of the above mentioned inner upright or crosspiece elements 21, 10, as shown in Figs. 1, 6 and 11.

It will be understood that in the assembled conditions of the cabinet the emerging structure 18 is internal to the volume of the cabinet itself.

The angular connection element is also provided with third attachment means 19 also set to allow engagement of further elements of the cabinet structure such as the roof 103, bottom, feet, mouldings, wheels and/or eyebolts or similar elements.

Said third attachment means 19 is directly formed on the main body 2 and is of one piece construction therewith.

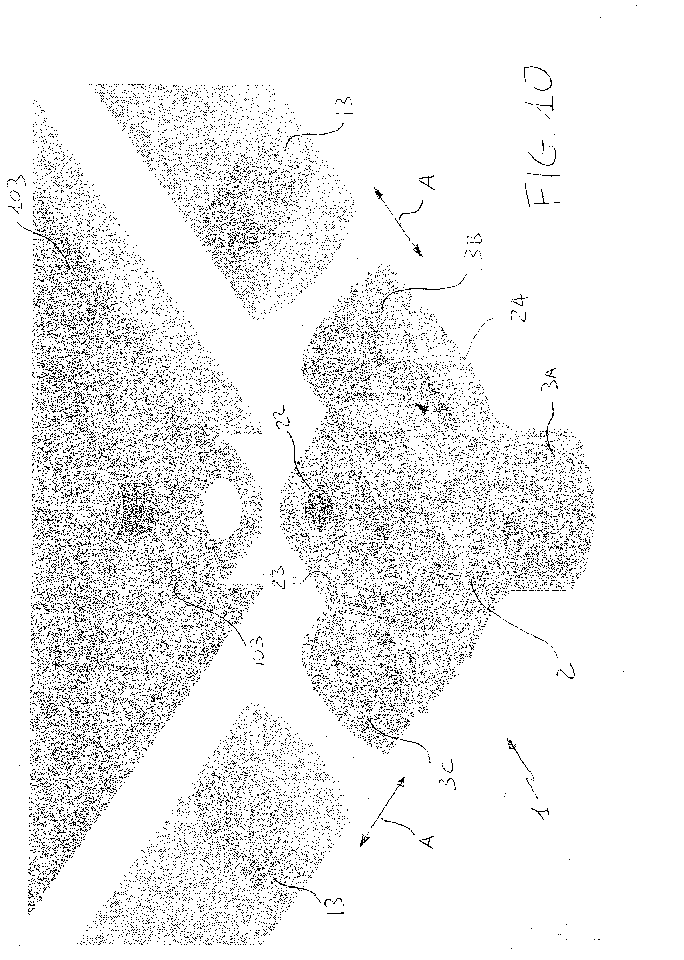

This means may in particular consist of a hole 22 with a vertical axis under use conditions of the cabinet and a possible centring portion 23 intended for correct positioning of a possible panel defining the roof and/or bottom (in this connection see Fig. 10).

The angular connection element will generally be the same for all vertices of the cabinet and all the section members defining the crosspieces and uprights will be also identical with each other.

In this connection, use of eight angular connection elements all identical with each other and of eight crosspiece elements all having the same section and four upright elements all of the same section as well, will allow the load bearing structure of the cabinet to be made.

The angular connection element will be in particular made up of a single piece defining both the engagement portions 3a, 3b, 3c, and the first, second and third attachment means 6, 9, 19 of the structure.

For example, this angular connection element can be obtained by moulding.

It should be appreciated that both the crosspiece elements and the upright elements are substantially devoid of cavities, holes or similar attachment means as all the above functions are assigned to the angular elements.

In this way it is possible to use section members of the standard type that must not be further worked.

The invention achieves important advantages.

First of all use of an angular connection element in accordance with the invention allows many of the engagement functions that in cabinets of known type have been hitherto assigned to other components connected with the uprights and/or crosspieces of the cabinet structure, to be integrated into a single piece.

In particular, the angular element herein described allows engagement of all section members and of the rests for the cabinet side panels and back panel, and also allows the hinges, uprights and crosspieces defining the inner cabinet structure to be conveniently supported.

In addition, the angular element enables engagement of the bottom and roof, as well as of the lifting and transport eyebolts. The above is obtained by a moulded element of reduced costs.

Furthermore, due to the fact that all attachment means are integrated into the main body of the angular element, use of sections members of standard section to define the cabinet structure is allowed, on which no further working operations such as perforations or the like are required.

Due to the reduction in the number of pieces and the assembling steps, there is also an important reduction in the overall costs of the structure and in the working time.

## Claims

1. A connection element for cabinets, in particular cabinets for electric and/or electronic apparatuses comprising:
- a main body (2);
- at least one first and one second and preferably one third engagement portions (3a, 3b, 3c) emerging from the main body (2) and designed to be engaged to respective section members (4) defining crosspieces (4a) and uprights (4b) of a support structure (5) of a cabinet, **characterised in that** it further comprises first attachment means (6) associated with the main body (2) and set to enable engagement of further elements of the cabinet structure such as hinges (7) and hooking supports (8) for panels, and second attachment means (9) associated with the main body (2) and set to enable engagement of further elements of the cabinet structure such as further uprights (21) and/or crosspieces (10) constituting the inner structure of the cabinet.

2. A connection element as claimed in claim 1, **characterised in that** it is an angular connection element.

3. An angular element as claimed in claim 1, **characterised in that** the engagement portions (3a, 3b, 3c) each have a respective surface (11) conforming in shape to an inner cavity of the section member (4) defining an upright (4a) or a crosspiece (4b).

4. An angular element as claimed in anyone of the preceding claims, **characterised in that** the engagement portions (3a, 3b, 3c) each have an abutment surface (12) transverse and preferably orthogonal to an insertion direction (A) of the engagement portion (3a, 3b; 3c) in the section member (4), the abutment surface (12) abutting against a body (13) housed internally of the section member.

5. An angular element as claimed in anyone of the preceding claims, **characterised in that** it further comprises fastening means (14) to secure the angular element (1) to the section members (4), said fastening means (14) being preferably defined by respective screws (15).

6. An angular element as claimed in anyone of the preceding claims, **characterised in that** the first attachment means (6) comprises at least one, and preferably two, seats (16, 17) made of one piece construction in the main body (2).

7. An angular element as claimed in claim 6, **characterised in that** said seats (16, 17) have a substantially circular shape to receive a hinge (7) of the cabinet door or hooking supports (8) for panels, the two seats (16, 17) preferably lying in the same horizontal plane, under use conditions of the angular element.

8. An angular element as claimed in anyone of the preceding claims, **characterised in that** the second attachment means (9) is defined on a structure (18) emerging from the main body (2), said emerging structure (18) being preferably made of one piece construction with the main body (2) and more preferably defining an abutment surface (18d) for doors and panels of the cabinet.

9. An angular element as claimed in claim 8, **characterised in that** the emerging structure (18) has a section in a horizontal plane that is defined by angled lengths in succession (18a, 18b, 18c), the first and third lengths (18a, 18c) being preferably orthogonal to each other.

10. An angular element as claimed in either of claims 8 or 9, **characterised in that**, under assembled conditions of the cabinet, the emerging structure (18) is internal to the cabinet volume.

11. An angular element as claimed in anyone of the preceding claims, **characterised in that** it further comprises third attachment means (19) associated with the main body (2) and set to enable engagement of further elements of a cabinet structure such as the roof (20), bottom, feet, mouldings, wheels and/or eyebolts and the like.

12. An angular element as claimed in claim 11, **characterised in that** the third attachment means (19) is formed on the main body (2) and is of one piece construction therewith.

13. An angular element as claimed in claim 11, **characterised in that** the third attachment means (19) comprises a hole (22) having a vertical axis under use conditions of the cabinet and a centring portion (23) to position a possible panel.

14. An angular element as claimed in claim 5, **characterised in that** it further comprises a lower cavity (24) to allow insertion of screws (15) for fastening of same to the section members (4).

15. A metal cabinet, in particular for electric and/or electronic apparatuses, comprising:
- a predetermined number of section members (4) designed to constitute the uprights/crosspieces (4a, 4b) of a cabinet; and
- a predetermined number of angular elements (1) each designed to receive two crosspieces (4a) and one upright (4b) of the cabinet in engagement, said section members (4) and angular elements (1) defining the parallelepiped load bearing structure (5) of the cabinet, **characterised in that** said angular elements are in accordance with one or more of the preceding claims.

16. A cabinet as claimed in claim 15, **characterised in that** all angular elements are identical with each other.

17. A cabinet as claimed in claim 15, **characterised in that** all section members (4) have the same section.
